# EUROPEAN PATENT SPECIFICATION

(11) **EP 3 387 407 B1**
(45) Date of publication and mention of the grant of the patent: **10.05.2023**
(21) Application number: 16819422.3
(22) Date of filing: 06.12.2016
(51) Int. Cl.: G01M 3/16

(54) **ELECTRIC CABLE DETECTING PRESENCE OF LIQUIDS**
ELEKTRISCHES KABEL ZUR DETEKTION DES VORHANDENSEINS VON FLÜSSIGKEITEN
CÂBLE ÉLECTRIQUE DÉTECTANT LA PRÉSENCE DE LIQUIDES

(30) Priority: 08.12.2015 CZ 20150870
(43) Date of publication of application: 17.10.2018
(73) Proprietor: Kovaz S.r.o., 533 51 Pardubice - Rosice (CZ)
(72) Inventor: KUBÍK, Ondrej, 530 02 Pardubice (CZ)
(74) Representative: Sedlák, Jirí
(86) International application number: PCT/CZ2016/000127
(87) International publication number: WO 2017/097273

(56) References cited:
- EP-A1- 1 637 786
- EP-A1- 1 637 786
- US-A- 3 086 069
- US-A- 3 086 069
- US-A- 3 662 367
- US-B1- 6 175 310
- US-B1- 6 175 310

## Description

### Field of the invention

The invention concerns an electric cable detecting presence of liquids to indicate leakages in the course of car manufacturing or to be used as a part of flood and water leakage alarms and indicators in buildings.

### Background of the invention

One of the last testing phases in the process of car manufacturing includes the so-called water tests in which the manufactured cars are exposed to water streams of different pressures in different directions to check the car's resistance against penetration of water or the car's tightness. Simple humidity detectors are known, allowing reliable detection of water penetrating into the car interior, which consist of a simple circuit made up of a sensor, a set of cables and an indication part. After getting into contact with water the circuit creates a short circuit that is subsequently detected by the indication part that uses signaling in form of light, vibration or sound.

The document DE 19815062 describes a system for easy detection of penetrated humidity into the car interior, which measures electric capacity between a conductive layer and the car floor. The electric conductive layer is created as a coat on the bottom side of the carpet which represents an insulation layer thanks to the integrated insulating polyurethane material.

The document DE 102012007552 describes a testing device with a sensor to check humidity in the car interior. The check of humidity presence in the car interior or in poorly accessible places occurs through capillary transport of water. A fabric is situated on the bottom board which also includes fibers leading to a detection device.

Other known humidity detection devices in the automotive industry consist of conductive cables with an insulation layer made of non-conductive polymers, e.g. polyvinyl chloride. One disadvantage of detection devices of this type is that they detect humidity only after flooding of the entire cable profile and therefore the devices are not designed to detect immediate flooding of the car.

The document US 3662367 describes an electric cable for detecting and locating of water in an air multipair insulated telephone cable. Electric cable consists of two conductors. A plastic barrier is placed between two pulp insulated conductors. Conductors can be twisted together. There are gaps or windows created in the plastic barrier every 50 inches.

There are devices for humidity indication that are used as a part of home alarms and flood detectors of water leakage in houses or watercrafts using the principle of conductive cables with an insulation layer. The document WO 2005119195 describes a system with a humidity sensor designed to detect humidity in gaseous or liquid environments. It consists of two electrodes, mutually separated with an absorption material. The electrodes have four openings through which the humidity gets into contact with chemical compounds that react with gaseous or liquid media.

The purpose of the invention is to create an electric cable to detect presence of liquids, which will eliminate the above-mentioned shortcomings and which will be cheap, simple to control and efficient in providing immediate information about presence of humidity in the car interior.

### Summary of the invention

The above-mentioned shortcomings have been eliminated by the electric cable detecting presence of liquids under this invention.

The electric cable detecting presence of liquids consists of at least two conductors that are under dry conditions electrically insulated from each other with an insulation material and in presence of liquids they create a closed electric circuit. The principal of the invention consists in the fact that the insulation material is made up of a paper shell. The paper shell is in the form of a helix around at least one of the conductors. Once the paper material soaks in the liquid the electric circuit closes which results in indication of the present liquid.

According to the invention hereunder the paper shell is created around one conductor and the other conductor forms a helix on the perimeter of the paper shell. In another convenient version of the invention hereunder the paper shell is created around each of the conductors and the mutually insulated conductors are arranged in the form of a double-helix.

The paper shell is according to the invention created in form of a rectangle of any length and the width of 10 to 100 mm and it is arranged as a helix to form a cylinder-like twisted paper string with the diameter of 1 to 2.5 mm that can be untwisted again. The material can be pasted over or applied as a coat on various objects. Thanks to its structure and ability to absorb water it is highly suitable for this application.

The paper shell is preferably made of a material based on cellulose obtained from a special type of pine with an admixture of silk which makes it exceptionally strong and flexible.

In a convenient version of the invention hereunder at least one conductor is made of copper or copper alloy. Such materials are cheap and thanks to their conductive properties it is possible to use different copper alloys in different ratios.

In one convenient version of the invention hereunder at least one end of the conductors with the paper shell is lead out to a platform with contacts for connection of an evaluation device. The platform consists of a sticker with two contacts made of aluminum. The platform serves as an interconnection with the evaluation device. The evaluation device is provided with contacts which, along with the contacts created on the platform, are used to indicate presence of liquids.

The subject matter of this invention is also a device detecting presence of liquids which consists of conductors that are under dry conditions electrically insulated from each other with an insulation material and in presence of liquids they create a closed electric circuit and that can be connected to the evaluation device. The principle of the invention consists in the fact that the insulation material is made up of a paper shell. The paper shell is in the form of a helix around at least one of the conductors. The conductors are connected to a control unit of the car provided with software for instant evaluation of presence of liquids in the car interior.

The advantage of the electric cable for detection of presence of liquids under this invention consists particularly in the fact that the solution is economical, simple to control and efficient in its immediate ability to inform about presence of water in the car interior. The present invention consists of an electric cable as defined in claim 1.

### Brief description of drawings

The present invention will be explained in more detail using the following figures, where:
- Fig.1: shows a schematic drawing of the electric cable detecting presence of liquids, with two conductors provided with paper shells arranged in the form of a double-helix, while the conductors are lead out to contacts on a platform,
- Fig. 2: shows a schematic drawing of the electric cable detecting presence of liquids, with one conductor provided with a paper shell and with the other conductor forming a helix on the perimeter of the paper shell, while the conductors are lead out to contacts on a platform,
- Fig. 3: shows a schematic drawing of the electric cable detecting presence of liquids with one conductor provided with a paper shell and with the other conductor forming a helix on the perimeter of the paper shell with an unfolded paper shell in one part of the cable.

### Examples of the preferred embodiments of the invention

It is understood that the below described and depicted particular cases of embodiment of the invention are presented for illustration and not to limit the invention to such examples. Those skilled in the art will find or will be able to provide, based on routine experimenting, one or more equivalents of the embodiments of the invention disclosed herein. Such equivalents shall be included into the scope of the following claims.

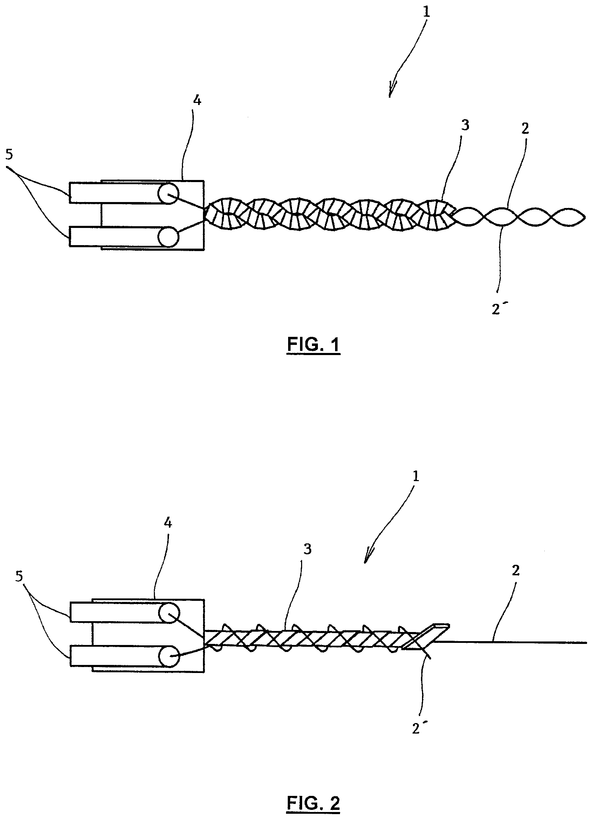

In the embodiment shown in Figure 1 through Figure 3 the electric cable 1 detecting presence of liquids is created so that it can be placed on the floor of a tested car for the last stage of testing during car manufacturing in order to test tightness of a car exposed to a water stream in a testing laboratory or into the floor of a house or apartment as a part of home alarms and detectors of leaking liquid or flooding of the house or apartment. The electric cable **1** in the embodiment shown in Figures 1 through 3 is made up of two conductors **2** and **2',** where one conductor **2** is made of copper and the other conductor **2'** is made of an alloy of copper and nickel. In other examples of embodiment the conductors **2** and **2'** may be made of other alloys containing copper. The conductors **2** and **2'** are under dry conditions mutually electrically insulated with an insulation material which in this case is in the form of a paper shell **3.** In presence of liquids the paper material soaks in water and the conductors **2** and **2'** create a closed electric circuit.

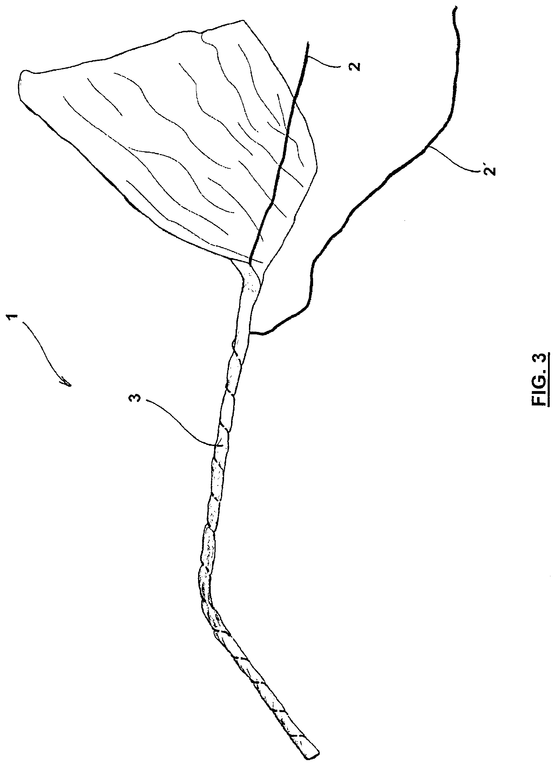

The Figure 1 shows an example of embodiment of the electric cable **1** in an arrangement where two conductors **2** and **2'** are provided with a paper shell **3** and the insulated conductors **2** and **2'** are mutually arranged into a double-helix. The paper shell **3** is in all examples of embodiment made in a rectangular shape 5 m long and 50 mm wide. The paper used to make the paper shell **3** was made of cellulose obtained from a special type of pine with an admixture of silk, which makes it exceptionally strong and flexible. The paper shell **3** is subsequently wound around the conductor **2** in a spiral which means that the paper shell **3** is in the shape of a helix. The spiralshaped paper shell **3** forms a cylinder-shaped twisted string with the diameter of 1.8 mm and is shown in Figure 3. In other examples of the arrangement the paper shell **3** may have different dimensions. Ends of the conductors **2** and **2'** are lead out to contacts **5** on the platform **4.** The platform **4** consists of a sticker with the contacts **5** created of aluminum. The platform **4** represents a link with an evaluation device, e.g. testing pliers with a head connected to the platform **4,** which evaluates whether the electric circuit was closed as a result of present liquid.

The Figure 2 shows an example of embodiment of the electric cable **1** in an arrangement where one conductor **2** is provided with a paper shell **3** and the other conductor **2'** forms a helix on the perimeter of the paper shell **3**. Ends of the conductors **2** and **2'** are lead out to the platform **4** to be connected to the evaluation device.

The equipment with the electric cable **1** detecting presence of liquids is made up of two conductors **2** and **2**' in an arrangement where each of the conductors **2** and **2'** is provided with a paper shell **3** in form of a helix and they are mutually twisted to form a double-helix. In another example of embodiment the equipment can be made up of two conductors **2** and **2',** while only one of the conductors **2** is provided with the paper shell **3** and the other conductor **2**' is in the form of a helix on the perimeter of the paper shell **3.** The conductors **2** and **2'** are under dry conditions mutually electrically insulated with an insulation material that in this in this example of embodiment is the paper shell **3** and in presence of liquids they form a closed electric circuit. The equipment is via the platform **4**, which is made up of a sticker and aluminum contacts **5** on its surface and which is connected with ends of conductors **2** and **2'**, interconnected with a car's control unit. The control unit of the car is provided with software for instant evaluation of presence of liquids in the car interior.

### Industrial applicability

The electric cable under the present invention can be used to detect presence of liquids during manufacturing of cars for indication of leakage during the so-called water tests on manufacturing lines and in test laboratories when the car is exposed to a stream of water or to detect presence of liquids as a part of alarms and detectors of water flooding or leakage in buildings.

## Claims

1. An electric cable (1) detecting presence of liquids in a car interior made up of at least two conductors (2, 2'), that are under dry conditions mutually electrically insulated with an insulation material and in presence of liquids form a closed electric circuit, **characterized in that** the insulation material is at least one paper shell (3) arranged in the shape of a helix around one of the conductors (2, 2'), the paper shell (3) is formed around one of the conductors (2) along the entire length of the conductor (2) and the other conductor (2') forms a helix on the perimeter of the paper shell (3), wherein the paper shell (3) has a rectangular shape and the width of 10 to 100 mm and in the helix it forms a twisted cylindrical paper string with the diameter of 1 to 2.5 mm.

2. The electric cable according to claim 1, **characterized in that** the paper shell (3) is made of a cellulose-based material with an admixture of silk.

3. The electric cable according to claim 1 or 2, **characterized in that** at least one end of the conductors (2, 2') with the paper shell (3) is lead out to the platform (4) with the contacts (5) for connection to an evaluation device.

4. The electric cable according to claim 3, **characterized in that** the platform (4) is made of a sticker with two contacts (5) made of aluminum.

5. Equipment for detection of presence of liquids comprising the electric cable (1) detecting presence of liquids in a car interior according to any of claims 1 to 4, which can be connected to an evaluation device, **characterized in that** the conductors (2, 2') of the electric cable (1) are interconnected with a control unit of a car provided with software for evaluation of presence of liquids in the car interior.

## Patentansprüche

1. Elektrisches Kabel (1), das das Vorhandensein von Flüssigkeiten in einem Fahrzeuginnenraum detektiert, bestehend aus mindestens zwei Leitern (2, 2'), die unter trockenen Bedingungen mit einem Isoliermaterial gegeneinander elektrisch isoliert sind und bei Vorhandensein von Flüssigkeiten einen geschlossenen Stromkreis bilden, **dadurch gekennzeichnet, dass** das Isoliermaterial mindestens ein Papiermantel (3) ist, angeordnet in Form einer Helix um einen der Leiter (2, 2'), der Papiermantel (3) um einen der Leiter (2) entlang der gesamten Länge des Leiters (2) gebildet ist und der andere Leiter (2') eine Helix am Umfang des Papiermantels (3) bildet, wobei der Papiermantel (3) eine rechteckige Form und die Breite von 10 bis 100 mm hat und in der Helix einen verdrillten zylindrischen Papierstrang mit dem Durchmesser von 1 bis 2,5 mm bildet.

2. Elektrisches Kabel nach Anspruch 1, **dadurch gekennzeichnet, dass** der Papiermantel (3) aus einem auf Cellulose basierenden Material mit einer Beimischung von Seide hergestellt ist.

3. Elektrisches Kabel nach Anspruch 1 oder 2, **dadurch gekennzeichnet, dass** mindestens ein Ende der Leiter (2, 2') mit dem Papiermantel (3) zur Plattform (4) mit den Kontakten (5) zum Anschluss an eine Auswerteeinrichtung herausgeführt ist.

4. Elektrisches Kabel nach Anspruch 3, **dadurch gekennzeichnet, dass** die Plattform (4) aus einem Aufkleber mit zwei Kontakten (5) aus Aluminium besteht.

5. Ausrüstung zur Detektion des Vorhandenseins von Flüssigkeiten, umfassend das elektrische Kabel (1), das das Vorhandensein von Flüssigkeiten in einem Fahrzeuginnenraum nach einem der Ansprüche 1 bis 4 detektiert und an eine Auswerteeinrichtung anschließbar ist, **dadurch gekennzeichnet, dass** Leiter (2, 2') des elektrischen Kabels (1) mit einer Steuereinheit eines Fahrzeugs verbunden sind, die mit Software zur Auswertung des Vorhandenseins von Flüssigkeiten im Fahrzeuginnenraum ausgestattet ist.

## Revendications

1. Un câble électrique (1) détectant la présence de liquides à l'intérieur d'une voiture, fait d'au moins deux conducteurs (2, 2') qui sont, dans des conditions sèches, mutuellement isolés électriquement avec un matériau d'isolation et, en présence de liquides, forme un circuit électrique fermé, **caractérisé en ce que** le matériau d'isolation est d'au moins une enveloppe papier (3) arrangée sous la forme d'une hélice autour de l'un des conducteurs (2, 2'), l'enveloppe en papier (3) est formée autour de l'un des conducteurs (2) le long de la longueur entière du conducteur (2) et l'autre conducteur (2') forme une hélice sur le périmètre de l'enveloppe en papier (3), où l'enveloppe en papier (3) a une forme rectangulaire et la largeur de 10 à 100 mm et dans l'hélice elle forme une ficelle en papier cylindrique avec un diamètre de 1 à 2,5 mm.

2. Le câble électrique selon la revendication 1, **caractérisé en ce que** l'enveloppe en papier (3) est faite en matériau de cellulose avec un mélange de soie.

3. Le câble électrique selon la revendication 1 ou 2, **caractérisé en ce qu'**au moins l'une des extrémités des conducteurs (2, 2') avec l'enveloppe en papier (3) est conduite vers la plateforme (4) avec les contacts (5) pour la connexion à un appareil d'évaluation.

4. Le câble électrique selon la revendication 3, **caractérisé en ce que** la plateforme (4) est faite d'un autocollant avec deux contacts (5) faits en aluminium.

5. L'équipement pour la détection de la présence de liquides comprenant le câble électrique (1) détectant la présence de liquides à l'intérieur d'une voiture selon n'importe laquelle des revendications 1 à 4, qui peut être connecté à un appareil d'évaluation **caractérisé en ce que** les conducteurs (2, 2') du câble électrique (1) sont interconnectés avec une unité de contrôle d'une voiture fournie d'un software pour l'évaluation de la présence de liquides dans l'intérieur de la voiture.
